# EUROPÄISCHE PATENTANMELDUNG

(11) **EP 1 023 875 A2**
(43) Veröffentlichungstag der Anmeldung: **02.08.2000**
(21) Anmeldenummer: 00100139.5
(22) Anmeldetag: 07.01.2000
(51) Int. Cl.: A61C 13/00

(54) **Vorrichtung zum Auftragen und Verarbeiten von Wachs**

(30) Priorität: 29.01.1999 DE 19903529
(71) Anmelder: Herrmann, Thomas, 83661 Lenggries (DE)
(72) Erfinder: Herrmann, Thomas, 83661 Lenggries (DE); Hörmann, Gerhard, 89264 Weissenborn (DE); Plomteux, Ralf, 89263 Weissenborn (DE)
(74) Vertreter: Patentanwälte Rüger, Barthelt & Abel

(57) **Zusammenfassung**

Eine Vorrichtung (1) zum Auftragen und Verarbeiten von Wachs, insbesondere von dentalem Wachs, weist eine beheizbare Vorratskammer (7) für das Wachs, eine Arbeitsspitze (5) zum gezielten Aufbringen von Wachs auf ein Modell sowie zum Modellieren und eine Dosiereinrichtung (35) auf, die zum Zuführen von geschmolzenem Wachs aus der Vorratskammer (7) über einen Zulaufkanal (16) zu der Arbeitsspitze (5) dient.

Die Arbeitsspitze (5) weist vorzugsweise einen koaxialen Aufbau von einem Röhrchen (36) aus elektrischem Widerstandsmaterial in einem Röhrchen (37) aus vorzugsweise Edelstahl, wobei beide Röhrchen (36, 37) gegeneinander isoliert und an ihrer Stirnseite, oder in deren Nähe miteinander kontaktiert und stromdurchflossen sind. Die Arbeitsspitze wird in dem zum Wachsaufbringen und Modellieren verwendeten Bereich und in ihrem Innern im Wesentlichen über ihre gesamte Länge elektrisch beheizt.

## Beschreibung

Die Erfindung betrifft eine Vorrichtung zum Auftragen und Verarbeiten von Wachs, insbesondere von dentalem Wachs.

Solche Vorrichtungen werden insbesondere im Dentalbereich zum Anfertigen von Zahnersatz verwendet. Dazu muss das Modellierwachs geschmolzen und gezielt aufgetragen werden. Ferner ist häufig eine Nachbearbeitung des Modells bzw. des präparierten Zahnstumpfes erforderlich, um charakteristische Formen der Zähne, Kauflächen, Brücken und dgl. herauszubilden. Hierzu dient eine auf dem Modellierwerkzeug ausgebildete oder angebrachte Arbeitsspitze oder Modellierspitze.

Aus dem Stand der Technik sind verschiedene Ausführungsformen von Vorrichtungen zum Verarbeiten von Modellierwachs bekannt. Bspw. sind in der DE 40 18 107 C1 und in der DE 196 45 520 A1 Modelliervorrichtungen offenbart, bei denen die Modellierspitze beheizt wird, wodurch das Aufheizen und Abkühlen der Modellierspitze weitgehend trägheitslos erfolgt.

Diese Vorrichtungen enthalten jedoch keinen Vorratsbehälter für das Wachs. Es muss folglich ein zusätzliches Werkzeug, bspw. ein Wachsmesser oder eine Sonde, das über einer offenen Flamme erwärmt oder elektrisch beheizt wird, dazu verwendet werden, das Wachs zu schmelzen und auf einen präparierten Zahnstumpf bzw. Kieferkamm aufzubringen. Durch das ständige Wechseln zwischen Aufbring- und Ausformarbeit wird die Herstellung von Wachsmodellationen verzögert und erschwert.

Aus der DE 36 11 186 C2 und der DE 33 14 585 sind Vorrichtungen zum Verarbeiten von Modellierwachsen bekannt, bei denen Wachs in einer an der Vorrichtung vorgesehenen beheizten Vorratskammer vorgehalten, zum Schmelzen gebracht und über einen Zulaufkanal zur Modellierspitze befördert wird. Für den Wachsaustrag sorgt jeweils eine Dosiereinrichtung.

Im Zulaufkanal, der die beheizte Vorratskammer mit der der Umgebungstemperatur ausgesetzten Arbeitsspitze verbindet, kann sich das Wachs abkühlen und zumindest teilweise seine flüssige Konsistenz verlieren. Dies behindert das Auftragen des Wachses.

Aus der DE 33 46 254 A1, von der die Erfindung ausgeht, ist eine Vorrichtung bekannt, die eine Wachsvorratskammer, eine Wachsvorschubeinrichtung und ein Düsenteil aufweist, das als Zulaufkanal zwischen der Wachsvorratskammer und einem Adapter oder einer Arbeitsspitze dient. Auf oder über dem Düsenteil ist eine Wachserhitzungseinrichtung in Form eines zylindrischen Keramikheizers (Heizpatrone) vorgesehen, die das geschmolzene Wachs auf dem Weg zum Adapter auf die erforderliche Verarbeitungstemperatur bringt.

Da die Erhitzungseinrichtung lediglich den hinteren, mit der Vorratskammer verbundenen Abschnitt des Düsenteils wärmt, kühlt sich auch hier das Wachs ab, bevor es zu dem Adapter und weiter auf das Modell gelangt. Eine Ausdehnung des koaxial auf dem Düsenteil angebrachten Keramikheizers ist nicht möglich, weil dadurch die Ausmaße des Düsenteils vergrößert und die Ausform- bzw. Modellierarbeiten dadurch erheblich gestört würden.

Die Vorrichtung erlaubt ferner keine genaue und schnelle Temperatureinstellung der Spitze, die hilfreich ist, um eine Zone auf dem erstarrten Wachsmodell anzuwärmen und nachzubearbeiten. Die thermische Trägheit der Heizpatrone verzögert die Aufheiz- und Abkühlphasen und somit die gesamte Modellierarbeit.

Davon ausgehend ist es Aufgabe der Erfindung, eine zweckmäßige und handliche Vorrichtung zum Auftragen und Verarbeiten von Modellierwachs zu schaffen. Insbesondere soll bei hoher Qualität und Präzision der zur Herstellung von Wachsmodellationen nötige Zeitaufwand erheblich reduziert werden.

Diese Aufgabe wird mit der Einrichtung nach Anspruch 1 gelöst.

Die erfindungsgemäße Vorrichtung zum Auftragen und Verarbeiten von Wachs, insbesondere von dentalem Wachs, ist mit einer Arbeitsspitze oder Modellierspitze aus einem elektrischen Widerstandmaterial versehen, die stromdurchflossen und zumindest in dem arbeitstechnisch nutzbaren Bereich, der beim Wachsaufbringen und Modellieren verwendet wird, und in ihrem Innern im Wesentlichen über ihre gesamte Länge elektrisch beheizt ist.

Die Arbeitsspitze weist vorzugsweise die Form eines Röhrchens auf, die zur Erfüllung der Doppelfunktion von Wachsauftragen und Modellieren in einem Arbeitsgang, ohne das Werkzeug zu wechseln, besonders geeignet ist.

Die elektrisch beheizbare Arbeitsspitze ist im Durchmesser äußerst klein gestaltet. Ihr Innendurchmesser liegt vorzugsweise in einem Bereich zwischen 0,14 mm und 1,00 mm, vorzugsweise bei 0,20 mm, und die Wandstärke beträgt vorzugsweise 0,08 mm. Durch diese Miniaturisierung ist einerseits eine hohe Genauigkeit sowohl bei der Aufbring- als auch bei der Modellierarbeit gewährleistet und andererseits die thermische Kapazität der Arbeitsspitze sehr minimiert, so dass Temperaturänderungen annähernd ohne Zeitverzögerung und Einschwingvorgänge durchführbar sind. Dies verkürzt die Aufheiz- und Abkühlzeiten bei der Modellationsarbeit und beim Wechseln der Arbeitsspitze.

In einer bevorzugten Ausführungsform ist das mikrofeine in sich aktiv heizende Kapillarröhrchen oder Widerstandsröhrchen innerhalb eines weiteren Röhrchens oder eines zylindrischen Hüllkörpers angeordnet, das bzw. der vorzugsweise aus einem korrosionsbeständigen Material, vorzugsweise aus Edelstahl besteht. Das Widerstandsröhrchen und das äußere Röhrchen sind im Wesentlichen koaxial zueinander angeordnet, wobei der Außendurchmesser des äußeren Röhrchens vorzugsweise um 0,25 mm größer als der Außendurchmesser des Widerstandsröhrchens gewählt wird. Beide Röhrchen sind bis auf eine einzige Verbindung voneinander elektrisch isoliert. In einer zweckmäßigen Ausführungsform wird als Isolierung eine auf der Oberfläche des Widerstandsröhrchens gebildete Oxidschicht des Widerstandsmaterials verwendet. Die elektrische Kontaktierung befindet sich vorzugsweise am oder in der unmittelbaren Nähe des Wachsaustrittsendes, damit die Arbeitsspitze vollständig stromdurchflossen und beheizt wird. Die beiden Miniaturröhrchen können bspw. mit einem Laser zusammen verschweißt werden.

Um der bei der Wachsmodellation erforderlichen Verwendung verschieden langer oder geformter Arbeitsspitzen nachzukommen, ist die Arbeitsspitze leicht und schnell auswechselbar an einem Teil der Modelliervorrichtung angebracht, das mit der Hand geführt werden kann. Vorzugsweise wird die Arbeitsspitze einfach in eine Aufnahmeöffnung an dem handgeführten Teil eingeführt und mittels eines Befestigungselementes daran gesichert. Entsprechende Kontaktelemente sorgen dafür, dass die elektrischen Anschlüsse schnell, bspw. durch Einrasten hergestellt werden können.

In einer Ausführungsform der Erfindung sind beide Röhrchen in einem Kopfteil angebracht, das in das handgeführte Teil eingeschraubt oder eingesteckt und eingerastet werden kann oder anderweitig daran befestigbar ist. Dabei steckt das äußere Röhrchen in einem äußeren Gehäuse, vorzugsweise darin eingepresst und steht über einen Kontaktschleifring mit einem Pol einer Spannungsquelle in Verbindung. Das Widerstandsröhrchen ist in einem hülsenartigen Verbindungselement angeordnet und über dieses mit dem anderen Pol der Spannungsquelle verbunden. Diese elektrische Verbindung ist vorzugsweise in unmittelbarer Nähe des in das handgeführte Teil ragenden Endes des Widerstandsröhrchens hergestellt, damit das Widerstandröhrchen auf nahezu seiner gesamten Länge stromdurchflossen und somit erwärmt wird. Ein Einsatz isoliert elektrisch das Verbindungsstück von dem äußeren Gehäuse des Kopfteils. Wird das Kopfteil bzw. die Arbeitsspitze ausgetauscht, ist unabhängig von der Länge der Spitze keine Anpassung der Temperatureinstellung von Nöten, weil sich durch die Konstantstromversorgung der Arbeitsspitze sofort dieselbe Arbeitstemperatur wie an der zuvor verwendeten Arbeitsspitze einstellt.

Die Länge des arbeitstechnisch nutzbaren, aus dem Kopfteil herausragenden Bereiches der Röhrchen kann sich je nach Anwendung im Bereich zwischen 2 mm und 30 mm bewegen. Bei Bedarf kann sie auch bis zu 100 mm betragen, ohne dass die Funktion beeinflusst wird. Das Wachsaustrittsende einer derart gestalteten Arbeitsspitze kann auch beliebig geformt sein, um den Aufbau unterschiedlicher, komplexer Oberflächenabschnitte des Modells zu bewerkstelligen.

An der Vorrichtung, vorzugsweise an dem mit der Hand geführten Teil, kann ein Schalter vorgesehen sein, um den Stromkreis zum Aufheizen der Arbeitsspitze zu schließen und zu öffnen. Weiterhin kann eine Steuereinrichtung integriert werden, um die Bearbeitungstemperatur genau festzulegen und zu verhindern, dass die Arbeitsspitze ausglüht oder dass Wachs überhitzt wird.

Zwischen dem handgeführten Teil und dem Kopfteil kann ferner ein Reinigungsfilter eingesetzt sein, das Schmutzpartikel aus dem flüssigen, von der Vorratskammer zur Arbeitsspitze geleiteten Wachs abscheidet.

Um geschmolzenes Wachs bereitzustellen, ist am vorderen, dem Kopfteil zugewandten Bereich der Vorratskammer vorzugsweise ein Heizelement vorgesehen. Die Vorratskammer kann dann mit festen Wachspatronen befüllt werden. Die Beheizung der Vorratskammer ist vorzugsweise ein- und ausschaltbar und ihre Temperatur durch entsprechende Mittel regelbar. Ein Temperatursensor ist hierzu vorzugsweise in der Nähe des Heizelementes anzubringen, der Rest der Regelelektronik kann jedoch außerhalb des handgeführten Teils angeordnet und mit dem Heizelement über eine Steuerleitung verbunden sein.

Mit Hilfe der Dosiereinrichtung kann der Wachsaustrag aus der Vorratskammer in einer vorbestimmten Weise gesteuert und dosiert werden, ohne die Modellierarbeit zu beeinträchtigen. Zur Steuerung der Dosierwirkung weist die Dosiereinrichtung eine Betätigungseinrichtung auf, die ergonomisch günstig, vorzugsweise durch einen Finger derselben Hand, die die Modelliervorrichtung hält, bedienbar ist. Eine Freigabeeinrichtung gibt den Wachszulauf frei oder sperrt diesen, und eine Vorschubeinrichtung befördert geschmolzenes Wachs aus der Vorratskammer.

In einer bevorzugten Ausführungsform weist die Vorrichtung hierzu eine an ihrer Außenseite angebrachte Taste, durch deren Auslösung eine Zugstange vorgeschoben wird, die über eine Mitnehmervorrichtung, vorzugsweise eine Mitnehmer-Klemmkupplung oder ein Klemmplättchen die Vorschubeinrichtung in Richtung auf das Kopfteil bewegt. Die Vorschubeinrichtung, die im Wesentlichen aus einer mit einem Schubkolben versehenen Kolbenstange besteht, drückt das geschmolzene Wachs aus der Vorratskammer in den Zulaufkanal hinaus, über den das Wachs zu der Arbeitsspitze gelangt. Beim Loslassen der Taste wird der Rücklauf und das Auskuppeln der Mitnehmervorrichtung durch eine bspw. an der Kolbenstange angebrachte Feder verursacht. Dabei wird mittels einer Reibungsbremse oder eines entsprechenden Elements verhindert, dass die Kolbenstange nach hinten mitgenommen wird. Eine zweite, härtere, vorzugsweise am Ende der Stange angebrachte Feder verhindert bei Erreichen des vorderen Anschlags des Kolbens oder wenn das Wachs nicht dünnflüssig genug ist ein Beschädigen der Vorschubmechanik. Auf diese Weise wird eine robuste Einrichtung geschaffen, die es erlaubt, eine genaue, der Schubweite proportionale Menge an Wachs aufzutragen.

In einer weiteren zweckmäßigen Ausführungsform der Dosiervorrichtung wird durch Druckbeaufschlagung auf eine Drucktaste oder einen Stift ein Ventil geöffnet und der Wachszulauf auf diese Weise freigegeben. Eine Vorschubeinrichtung, die bspw. durch eine Kolbenstange mit einem Schubkolben gebildet wird und durch eine Druckfeder vorgespannt ist, drückt dann flüssiges Wachs selbstätig in den Zulaufkanal zwischen der Vorratskammer und der Arbeitsspitze hinein. Nach Beendigung der Druckbeaufschlagung wird durch das Ventil der Zulaufkanal unmittelbar gesperrt. Diese Vorrichtung ermöglicht ein ebenso einfach bedienbares und exaktes Dosieren des Wachsaustrags.

Eine Modelliervorrichtung der oben dargestellten Art bietet somit den gesamten, zur Herstellung von Wachsmodellationen notwendigen Funktionsumfang. Mittels eines einzigen handgeführten Gerätes ist sowohl die Erwärmung, Bereitstellung und Dosierung als auch Modellation von Wachs möglich. Die Vorrichtung zeichnet sich durch hohe Präzision beim Aufwachsen sowie durch qualitativ hochwertige Modellationsergehnisse aus. Mit der beheizten, auswechselbaren Arbeitsspitze lassen sich Zonen am Wachsmodell nachträglich anwärmen und schnell bearbeiten. Die Zeitersparnis ist zudem aufgrund sehr kleiner Aufheizzeiten enorm.

Weitere vorteilhafte Einzelheiten von Ausführungsformen der Erfindung ergeben sich aus Unteransprüchen, der Zeichnung sowie der zugehörigen Beschreibung.

In der Zeichnung ist ein Ausführungsbeispiel des Gegenstandes der Erfindung dargestellt. Es zeigen:
Fig. 1 eine erfindungsgemäße Vorrichtung zum Auftragen und Verarbeiten von Modellierwachs, in einer perspektivischen, schematisierten Gesamtansicht,
Fig. 2 die Vorrichtung nach Fig. 1, in teilweise aufgeschnittener und teilweise schematisierter, nicht maßstabgetreuer Seitenansicht,
Fig. 3 eine vergrößerte Ansicht des Ausschnitts A aus Fig. 2 mit einer detaillierten Darstellung eines zu der Vorrichtung nach Fig.1 oder Fig. 2 gehörigen Kopfteils mit einer Arbeitsspitze samt Befestigung, und
Fig. 4 eine abgewandelte Ausführungsform einer Dosiervorrichtung in der Vorrichtung gemäß der Erfindung, in teilweise aufgeschnittener und teilweise schematisierter, nicht maßstabgetreuer Seitenansicht.

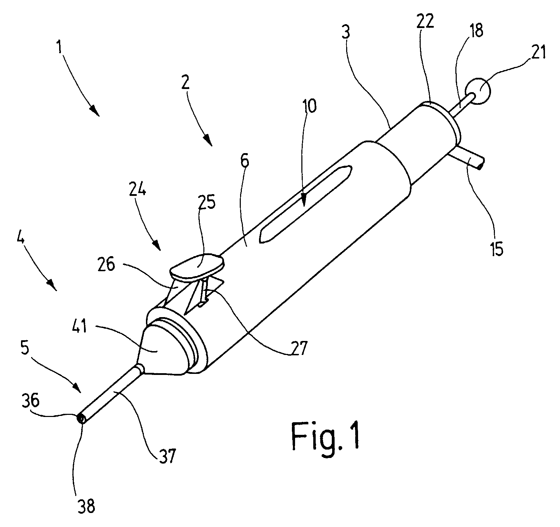

In Fig. 1 ist in einer perspektivischen Darstellung eine Vorrichtung 1 veranschaulicht, die dazu dient, Wachs auf ein Modell aufzubringen und zu verarbeiten. Sie wird vorzugsweise mit einer einzigen Hand gehalten, geführt und bedient. Sie besteht im Wesentlichen aus einem lang gestreckten Teil 2, das bspw. mit der Hand geführt wird und ein vorzugsweise zylindrisches Gehäuse 3 aufweist, und einem in ihrem vorderen Bereich angeordneten Kopfteil 4, das mit einer Arbeitsspitze oder Modellierspitze 5 versehen ist. Das Kopfteil 4 ist in dem Beispielsfalle separat von dem handgeführten Teil 2 vorgefertigt und an diesem wiederlösbar angebracht.

Das zylindrische Gehäuse 3 ist im vorliegenden Beispiel in einem Bereich, der von der Hand aufgenommen wird, mit einer Ummantelung 6 versehen, die vorzugsweise aus einem geeigneten wärmedämmenden oder -isolierenden Material, vorzugsweise aus Zellkautschuk oder Kunststoff besteht. Die Ummantelung 6 kann nicht weiter veranschaulichte Oberflächenbereiche aufweisen, die geriffelt, aufgeraut oder entsprechend geformt sind, um das Halten und Führen der Vorrichtung 1 zu begünstigen.

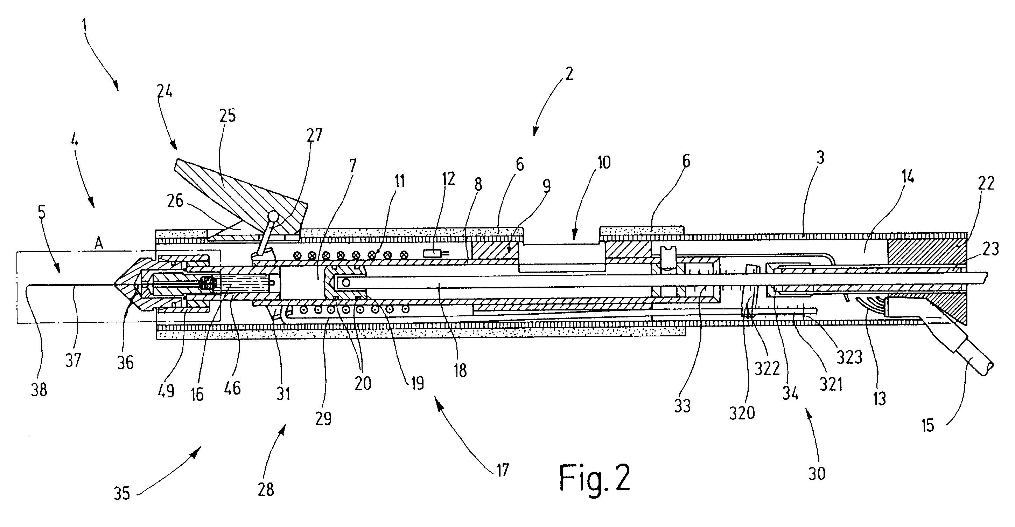

Wie in Fig. 2 detailliert dargestellt ist, ist in dem handgeführten Teil 2 eine Vorratskammer oder ein Vorratstank 7 für Wachs angeordnet, die bzw. der in Längsrichtung im Wesentlichen durch eine vorzugsweise zylindrische Wand 8 begrenzt und im mittleren Bereich des Gehäuses 3 durch einen zentrierenden und wärmeisolierenden Einsatz 9 geführt ist. Die Vorratskammer 7 wird durch einen vorzugsweise verschließbaren Nachfüllschacht 10, der sich ausgehend von der Ummantelung 6 bis ins Innere der Vorratskammer 7 erstreckt, mit festen Wachspatronen beladen. Die bevorzugt stäbchenförmigen Wachspatronen haben vorzugsweise eine Länge von etwa 35 mm und einen Durchmesser von etwa 5,5 mm.

Die Vorratskammer 7 ist in ihrem vorderen, dem Kopfteil 4 zugewandten Bereich mit einem Heizkörper oder Heizelement 11 versehen, der bzw. das durch Beheizen der Vorratskammer 7 das Wachs zum Schmelzen bringt. Das Heizelement 11 ist mittels eines in Fig. 2 nicht veranschaulichten Schalters ein- und ausschaltbar, und seine Heizleistung ist vorzugsweise regelbar. Zur genauen Regelung der Heizielstung und somit der Temperatur des flüssigen Wachses in der Vorratskammer 7 dient eine Regeleinrichtung, die in Fig. 2 nicht veranschaulicht und vorzugsweise außerhalb des Gehäuses 3 angeordnet ist. Ein Temperatursensor 12 ist hierzu in unmittelbarer Nähe des beheizten Bereichs der Vorratskammer 7 angebracht, um deren Ist-Temperatur abzugreifen. Das Heizelement 11 und der Temperatursensor 12 sind über entsprechende Leitungen 13 mit der Regeleinrichtung verbunden. Die Steuerleitungen und Versorgungsleitungen 13 sind innerhalb des Gehäuses 3 in einem Kabelschacht 14 und über ein Kabel 15 nach außen geführt.

Zwischen der Vorratskammer 7 und der Arbeitsspitze 5 ist ein Zulaufkanal 16 für geschmolzenes Wachs angeordnet. In den Zulaufkanal 16 kann ein auswechselbarer Filter integriert werden, um Schmutzpartikel aus dem dünnflüssigen Wachs abzusondern.

Zum Austrag von Wachs aus der Vorratskammer 7 wird im vorliegenden Beispiel eine Vorschubeinrichtung 17 verwendet, die im Wesentlichen aus einer in der Vorratskammer 7 verschiebbar angebrachten Kolbenstange 18 mit einem Schubkolben 19 besteht. Wird die Kolbenstange 18 vorwärts, in Richtung auf das Kopfteil 4 bewegt, drückt der Schubkolben 19 geschmolzenes Wachs aus der Vorratskammer 7 in den Zulaufkanal 16 hinaus. Der Schubkolben 19 weist an seiner Außenseite vorzugsweise ringförmige Abdichtungen 20 auf, die verhindern, dass flüssiges Wachs in den hinteren Raum der Vorratskammer 7 gelangt, in dem die Kolbenstange angeordnet ist. Zum Nachfüllen von Wachs wird der Kolben 19 in eine zurückgezogene Stellung gebracht, damit die Wachsstäbchen eingeführt werden können. Zu diesem Zweck ist die Kolbenstange 18 durch die hintere Stirnwand des handgeführten Teils 2 geführt und an ihrem Ende mit einem Griff 21 versehen. Die hintere Stirnwand ist vorzugsweise durch einen Deckel 22 verschlossen, an dem eine einstellbare Hülse 23 befestigt ist, die in das Innere des Gehäuses 3 hineinragt und die Kolbenstange 18 führt.

Es hat sich als vorteilhaft erwiesen, eine Modelliervorrichtung mit Mitteln auszustatten, mit denen der Wachsauftrag auf das Modell auf einfache Weise gesteuert werden kann. Hierzu ist in der erfindungsgemäßen Vorrichtung nach Fig. 2 eine Betätigungseinrichtung 24 vorgesehen, die vorzugsweise durch eine Taste 25 gebildet ist. Die Taste 25 ist vorzugsweise schwenkbar und schiefwinklig an einem Halteelement 26 gelagert, das vorzugsweise an der Außenseite des Gehäuses 3 angebracht ist. Sie kann auf diese Weise leicht bspw. mit dem Zeigefinger der die Vorrichtung 1 führenden Hand bedient werden. Es sind auch andere Formen von Tasten 25 möglich. Ebenso kann eine elektrische Steuerung der Wachszufuhr vorgesehen werden.

Die Taste 25 ist im vorliegenden Beispiel über ein Eingreifelement oder einen Eingreifarm 27, das bzw. der in das Innere des Gehäuses 3 hineinragt, mit einer Freigabeeinrichtung 28 verbunden, die dazu dient, den Wachszulauf freizugeben oder zu sperren.

Die Freigabeeinrichtung 28 weist im Wesentlichen eine Zugstange 29, die sich längs des Gehäuses 3 erstreckt, und eine mit der Zugstange 29 verbundene Mitnehmervorrichtung 30 auf. Die Zugstange 29 ist über ein Übertragungselement 31, das vorzugsweise als eine schwenkbar gelagerte Pendelhülse ausgebildet ist, mit der Betätigungseinrichtung 24, insbesondere mit dem Eingreifelement 27 der Taste 25 derart gekuppelt, dass die durch den Finger ausgelöste Tastenbewegung über die Zugstange 29 auf die Mitnehmervorrichtung 30 übertragen wird, welche die Vorschubeinrichtung 17 in Richtung auf die Modellierspitze bewegt, was zum Wachsaustrag führt.

Zur Mitnehmervorrichtung 30 gehören im Wesentlichen eine Mitnehmer-Klemmkupplung oder ein Mitnehmer-Klemmplättchen 320 sowie eine Druckfeder 321, die sich zwischen zwei Wellensicherungsringen 322, 323 befinden, die in Nuten auf der Zugstange 29 sitzen. Das Mitnehmer-Klemmplättchen 320 ist auf der Zugstange 29 in deren axialer Richtung frei beweglich angebracht, wobei es über die vorgespannte Druckfeder 321 gegen den vorderen Wellensicherungsring 322 gedrückt wird. In seiner Ausgangsstellung wird das Mitnehmer-Klemmplättchen 320 von einer weiteren, vorzugsweise auf der Kolbenstange 18 angebrachten Feder 33 leicht gegen eine Überwurfmutter der Reibungsbremse 34 gedrückt und durch die anschlagbedingte Geradestellung ausgekuppelt, wozu die von außen einstellbare Hülse 23 geeignet justiert wird. In dieser Ausgangsstellung kann somit jederzeit, bspw. zum Nachfüllen von Wachspatronen, per Hand mittels des Griffes 21 der Schubkolben 19 in beide Richtungen bewegt werden. Bei Betätigung der Taste 25 wird die Feder 33, die bedeutend weicher als die Druckfeder 321 ist, zusammengedrückt, und beim Loslassen der Taste 25 werden durch die Feder 33 die Mitnehmervorrichtung 30, die Zugstange 29 und die Betätigungseinrichtung 24 in die Ausgangsstellung zurückgebracht. Die Druckfeder 321 wird nur bei Blockieren des Schubkolbens 19 zusammengedrückt, bspw. wenn der vordere Anschlag erreicht oder wenn das Wachs nicht dünnflüssig genug ist.

Durch die Vorschubeinrichtung 17, die Freigabeeinrichtung 28 und die Betätigungseinrichtung 24 wird eine robuste wie auch einfach und ergonomisch bedienbare Dosiereinrichtung 35 geschaffen, mit der eine genaue Wachsmenge auf ein Modell aufgetragen werden kann. Die Menge an zugeführtem, geschmolzenem Wachs ist hierbei der Schubweite des Kolbens 19 proportional.

Um gezielte und präzise Aufbringarbeit sowie Modellationsarbeit verrichten zu können, sollte die Arbeitsspitze 5 an der die Auftragsöffnung aufweisenden Stelle nur geringe Ausmaße haben. Um dies zu gewährleisten, ist in einer zweckmäßigen Ausführungsform die Arbeitsspitze 5 in Form eines Miniaturröhrchens 36 ausgeführt. Es sind auch andere, vorzugsweise zylindrische Formen mit beliebig ausgestalteter Spitze möglich. Damit das Röhrchen 36 elektrisch beheizt werden kann, ist es aus einem Widerstandsmaterial gebildet. Werden die beiden Enden des miniaturisierten Widerstandsröhrchens 36 mit einer Konstantstromquelle verbunden, heizt sich das Widerstandsröhrchen 36 nahezu trägheitslos und auf seiner gesamten Länge auf die Bearbeitungstemperatur auf. Eine ungünstige Abkühlung von zuströmendem Wachs wird vermieden, und Zonen am Modell können mit einer solchen in sich aktiv heizenden Arbeitsspitze 5 schnell bearbeitet werden.

Zweckmäßigerweise ist das Widerstandsröhrchen innerhalb eines weiteren Röhrchens oder eines zylindrischen Hüllkörpers 37, im Wesentlichen koaxial zu diesem angeordnet. Das Röhrchen 37 ist vorzugsweise aus Edelstahl gebildet, und sein Querschnitt ist auch sehr gering. Beide Röhrchen 36, 37 sind auf ihrer gesamten Länge elektrisch voneinander isoliert, bspw. durch eine auf dem Widerstandsröhrchen ausgebildete Oxidationsschicht, und lediglich an dem Wachsaustrittsende 38 oder in dessen unmittelbarer Nähe miteinander leitend verbunden. Die anderen Enden werden an dem handgeführten Teil 2 befestigt und an jeweils einen Pol einer Spannungsquelle angeschlossen.

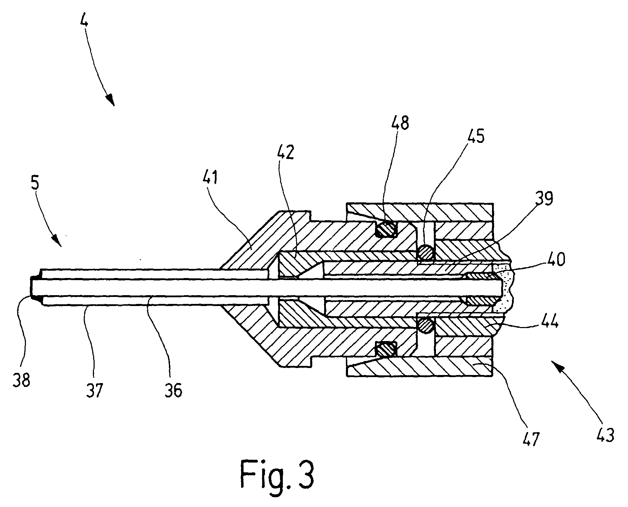

Im vorliegenden Beispiel ist eine derartige, aus den beiden Röhrchen 36, 37 gebildete Arbeitsspitze 5 in einem Kopfteil 4 angeordnet, das in Fig. 3 detailliert und übertrieben vergrößert veranschaulicht ist. Das Kopfteil 4 weist ein inneres hülsenartiges Verbindungselement 39, das ein konusförmiges, vorzugsweise aus Messing oder anderem Metall gebildetes Teil 40 umfasst, ein äußeres Gehäuse 41, das sich vorzugsweise zur Wachsaustrittsöffnung 38 hin verengt, und einen das äußere Gehäuse 41 von dem Verbindungselement 39 elektrisch isolierenden Einsatz 42. Alle Teile des Kopfteils 4 sind fest miteinander verbunden, vorzugsweise verklebt. Das Widerstandsröhrchen ist bis ins Innere des Verbindungselements 39 geführt und mit dem Konusteil 40 fest und elektrisch leitend verbunden, bspw. daran angelötet oder laserverschweißt. Dabei hat das Verbindungselement 39 nur über das Konusteil 40 elektrischen Kontakt zum Widerstandsröhrchen 36. Das äußere Röhrchen 37 steckt vorzugsweise in Presspassung in dem äußeren Gehäuse 41.

Das Kopfteil 4 ist vorzugsweise auswechselbar an dem handgeführten Teil 2 angebracht, damit unterschiedlich lange oder geformte Arbeitsspitzen zum Einsatz kommen können. Das Befestigen und Lösen sollte möglichst einfach und schnell bewerkstelligt und gleichzeitig auch die entsprechenden elektrischen Kontakte automatisch hergestellt oder getrennt werden. Hierzu ist aus der Technik eine Vielzahl von entsprechenden Verbindungsmöglichkeiten, bspw. mittels Rastelemente bekannt.

Im vorliegenden Beispiel wird das Kopfteil 4 mit dem handgeführten Teil 2 verschraubt, wie in Fig. 3 veranschaulicht ist. Hierzu weist das handgeführze Teil 2 eine Aufnahmevorrichtung 43 auf, die im Wesentlichen aus zwei konzentrisch zueinander angeordneten, elektrisch voneinander isolierten Hülsen besteht. Eine innere Hülse 44 weist zumindest in ihrem vorderen Abschnitt ihrer Innenumfangsfläche ein Innengewinde auf, das mit einem entsprechend an dem Verbindungselement 39 vorgesehenen Außengewinde verschraubt wird. Die innere Hülse 44 ist vorzugsweise mit der Vorratskammer 7 fest und derart verbunden, dass sie im Wesentlichen den Zulaufkanal 16 bildet, über den flüssiges Wachs aus der Vorratskammer 7 zu dem Verbindungselement 39 bzw. Widerstandsröhrchen 36 befördert wird. Die Schraubverbindung wird mit einer Dichtung 45 gegen Wachsaustritt abgedichtet. Beim Verschrauben stellt die Hülse 44 einen elektrischen Kontakt zwischen dem Widerstandsröhrchen 36 und bspw. dem Minuspol 46 der Spannungsquelle her. Eine äußere Hülse 47 ist über ein Kontaktelement oder Kontaktschleifring 48 mit dem äußeren Gehäuse 41 verbunden und stellt eine Verbindung zum Pluspol 49 her. Der Strom fließt somit über den Gewindepol 46 und das Konusteil 40 zum Widerstandsröhrchen 36 und weiter über den Kontakt 36, das äußere Röhrchen 37 und den Kontaktschleifring 48 zum Gegenpol 49 zurück. Auf diese Weise wird die Arbeitsspitze 5 in dem aus dem Kopfteil 3 herausragenden, arbeitstechnisch nutzbaren Bereich und in ihrem Inneren im Wesentlichen über ihre gesamte Länge beheizt.

In einer zweckmäßigen Ausführungsform ist die Außenwand 8 der Vorratskammer 7 mit der Spannungsquelle verbunden und stellt an ihrem vorderen Ende den Minuspol 46 zur Verfügung. Die Leitungen 13 müssen dann nicht über die gesamte Länge geführt werden. Ebenso ist es möglich, in diesen Stromkreis einen Schalter und vorzugsweise eine Steuereinrichtung zu integrieren, damit das Beheizen der Arbeitsspitze 5 manuell betätigt und die Bearbeitungstemperatur eingestellt werden kann. Eine derartige Steuereinrichtung ist gemeinsam mit der Steuereinrichtung zur Festlegung und Regelung der Temperatur der Vorratskammer 7 vorzugsweise außerhalb des Gehäuses 3 in einem Steuergerät anzuordnen, damit die Ausmaße der Modelliervorrichtung 1 keine unhandlichen Dimensionen erreichen.

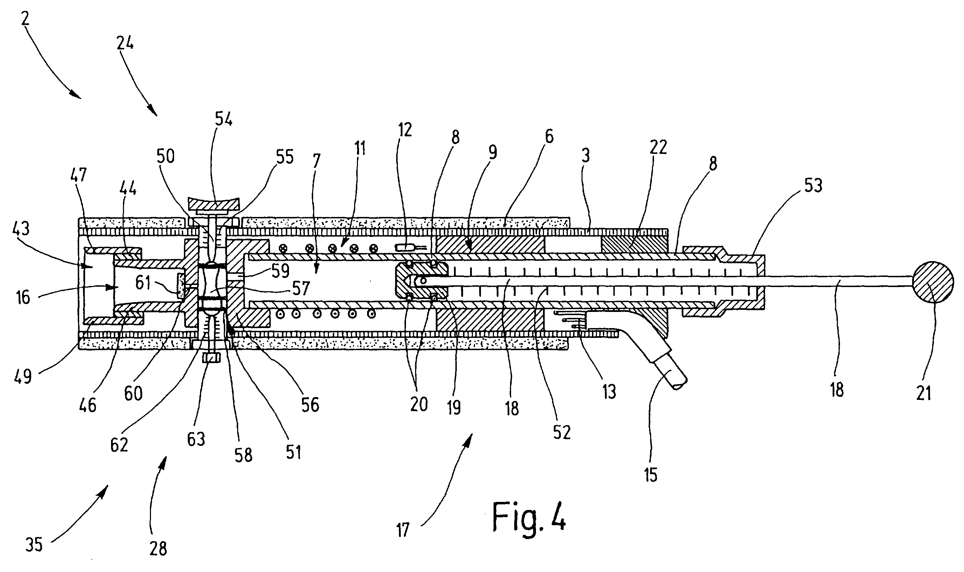

In der Fig. 4 ist ein handgeführtes Teil 2 einer Vorrichtung 1 zum Auftragen und Verarbeiten von Modellierwachs mit einer gegenüber der Fig. 2 abgewandelten Ausführungsform der Dosiervorrichtung 35 veranschaulicht. Soweit in der Figur Elemente wiederkehren, die bereits im Zusammenhang mit den Figuren 1 bis 3 erläutert sind, sind sie mit gleichen Bezugszeichen versehen und werden nicht erneut beschrieben.

Die Dosiervorrichtung 35 gemäß Fig. 4 weist eine Betätigungseinrichtung 24, die vorzugsweise in Gestalt eines ins Innere des Gehäuses 3 hineinragenden Stifts 50 ausgebildet ist, eine Freigabeeinrichtung 28, die durch ein zwischen der beheizten Vorratskammer 7 und der Aufnahmevorrichtung 43 für das Kopfteil 4 angeordnetes Ventil 51 gebildet ist, und eine Vorschubeinrichtung 17 auf, zu der im Wesentlichen eine mit einem Schubkolben 19 versehene Kolbenstange 18 gehört, wobei der Schubkolben 19 durch eine Druckfeder 52 derart vorgespannt ist, dass dieser beim geöffneten Ventil 51 flüssiges Wachs aus der Vorratskammer 7 in den Zulaufkanal 16 hinausdrückt.

Die auf die Vorschubeinrichtung 17 wirkende Feder 52 ist vorzugsweise an einer Endkappe 53 abgestützt, die die Vorratskammer 7 abschließt und durch die die Kolbenstange 16 führt, die an ihrem äußeren Ende mit dem Griff 21 versehen ist. Die zylindrische Wand 8 der Vorratskammer 7 ist im vorliegenden Ausführungsbeispiel über den Deckel 22 hinaus verlängert, der das Gehäuse 3 verschließt. Die Endkappe 53 ist vorzugsweise abschraubbar oder auf eine andere geeignete Weise an der Wand 8 befestigt. Zum Nachfüllen von Wachspatronen wird die Endkappe 53 von der Wand 8 gelöst und der Schubkolben 19 herausgezogen. Ein Nachfüllschacht 10 ist in diesem Fall nicht erforderlich.

Der Stift 50 kann zur Verbesserung der Bedienbarkeit an seinem äußeren Ende mit einer flächigen Drucktaste 54 versehen werden. Sobald der Stift 50 gedrückt wird, öffnet er das Ventil 51. Nach Beendigung der Druckbeaufschlagung wird der Stift 50 bspw. von einer Rückstellfeder 55 in seine Ruhestellung zurückgedrängt.

Das Ventil 51 ist vorzugsweise in Form eines Kolbenventils ausgeführt und weist ein Ventilgehäuse 56 auf, in dem ein Verschlussglied 57 längs verschiebbar angeordnet ist. Das Verschlussglied 57 ist mit Spaltdichtungen oder O-Ringen 58 gegen Wachsaustritt an dem Ventilgehäuse 56 abgedichtet. Über das Ventilgehäuse 56, das vorzugsweise aus einem elektrisch leitfähigen Material besteht, ist die Vorratskammer 7 mit der Aufnahmevorrichtung 43 für das Kopfteil 4 stabil und elektrisch verbunden. In einer bevorzugten Form ist das Ventilgehäuse 56 an die zylindrische Wand 8 der Vorratskammer 7 angeschraubt und mit der inneren Hülse 44 der Aufnahmevorrichtung 43 in einem Stück gefertigt. Es weist eine Einlassöffnung 59, über die das Ventil 51 mit der Vorratskammer 7 in Strömungsverbindung steht, und eine Auslassöffnung 60 auf, an der vorzugsweise ein Filter 61 zur Reinigung des Wachses auswechselbar angeordnet ist. Die Auslassöffnung 60 ist in Ruhestellung des Stifts 50 sowie des Verschlussglieds 57 von diesem verdeckt und dichtend verschlossen, und der Zulaufkanal 16 ist gesperrt. In eingedrückter Stellung des Stifts 50, die in Fig. 4 gezeigt ist, ist das Verschlussglied 57 gegen eine Ventilfeder 62 gedrückt und gibt die Austrittsöffnung 60 und somit den Zulaufkanal 16 frei. Die Ventilöffnungen 59, 60 und das Verschlussglied 57 können jedoch auch derart angeordnet sein, dass in Ruhestellung die Einlassöffnung 59 gesperrt und beim gedrückten Stift 50 diese freigegeben wird. Eine Ventilfeder 62, die an einer Einstellschraube 63 zur Festlegung des Anschlags für das Verschlussglied 57 angebracht ist, sorgt für das sichere Rückstellen des Verschlussglieds 57 in seine Ruhestellung, sobald der Stift 50 bzw. die Drucktaste 54 losgelassen wird. In einer zweckmäßigen Ausführungsform wird auch der Stift 50 von der Ventilfeder 62 über das Verschlussglied 57 in seine Ruhestellung zurückgebracht. In diesem Fall entfällt die Notwendigkeit, eine zusätzliche Rückstellfeder 55 für den Stift 50 vorzusehen.

Eine Vorrichtung 1 zum Auftragen und Verarbeiten von Wachs, insbesondere von dentalem Wachs, weist eine beheizbare Vorratskammer 7 für das Wachs, eine Arbeitsspitze 5 zum gezielten Aufbringen von Wachs auf ein Modell sowie zum Modellieren und eine Dosiereinrichtung 35 auf, die zum Zuführen von geschmolzenem Wachs aus der Vorratskammer 7 über einen Zulaufkanal 16 zu der Arbeitsspitze 5 dient.

Die Arbeitsspitze 5 weist vorzugsweise einen koaxialen Aufbau von einem Röhrchen 36 aus elektrischem Widerstandsmaterial in einem Röhrchen 37 aus vorzugsweise Edelstahl, wobei beide Röhrchen 36, 37 gegeneinander isoliert und an ihrer Stirnseite, oder in deren Nähe miteinander kontaktiert und stromdurchflossen sind. Die Arbeitsspitze wird in dem zum Wachsaufbringen und Modellieren verwendeten Bereich und in ihrem Innern im Wesentlichen über ihre gesamte Länge elektrisch beheizt.

## Patentansprüche

1. Vorrichtung (1) zum Auftragen und Verarbeiten von Wachs, insbesondere von dentalem Wachs, mit einem länglichen Gehäuse (3),
mit einer Vorratskammer (7) für das Wachs, die in dem Gehäuse (3) angeordnet ist,
mit einer Arbeitsspitze (5), die zum Auftragen von Wachs auf ein Modell sowie zum Verarbeiten von Wachs dient und die im Bereich des vorderen Endes des Gehäuses (3), in einem Kopfteil (4) angeordnet ist und aus diesem hinausragt,
mit einem Zulaufkanal (16) für geschmolzenes, flüssiges Wachs, der die Vorratskammer (7) mit der Arbeitsspitze (5) verbindet, und
mit einer Dosiereinrichtung (35) zum Zuführen von Wachs aus der Vorratskammer (7) über den Zulaufkanal (16) zu der Arbeitsspitze (5),
wobei die Arbeitsspitze (5) in dem arbeitstechnisch nutzbaren Bereich und in ihrem Innern im Wesentlichen über ihre gesamte Länge elektrisch beheizbar ist.

2. Vorrichtung nach Anspruch 1, dadurch gekennzeichnet, dass die Arbeitsspitze (5) durch ein Röhrchen (36) von geringem Durchmesser gebildet ist, das aus einem elektrischen Widerstandsmaterial besteht und stromdurchflossen ist.

3. Vorrichtung nach Anspruch 2, dadurch gekennzeichnet, dass das Widerstandsröhrchen (36) innerhalb eines elektrisch leitenden zylindrischen Hüllkörpers oder Röhrchens (37) geringen Durchschnitts im Wesentlichen koaxial zu diesem und elektrisch isoliert angeordnet ist, wobei die Röhrchen (36,37) mit jeweils einem Pol (46,49) einer Spannungsquelle in Verbindung stehen und in einem Bereich miteinander leitend verbunden sind.

4. Vorrichtung nach Anspruch 3, dadurch gekennzeichnet, dass der zylindrische Hüllkörper oder das Röhrchen (37) aus einem hochlegierten und korrosionsbeständigen Stahl, insbesondere aus Edelstahl gebildet ist.

5. Vorrichtung nach Anspruch 3, dadurch gekennzeichnet, dass der Innendurchmesser des Widerstandröhrchens (36) zwischen 0,14 mm und 1,00 mm, vorzugsweise 0,20 mm, und seine Wandstärke vorzugsweise 0,08 mm beträgt und dass sein Außendurchmesser vorzugsweise um etwa 0,25 mm kleiner ist als der Auβendurchmesser des zylindrischen Hüllkörpers oder des Röhrchens (37).

6. Vorrichtung nach Anspruch 3, dadurch gekennzeichnet, dass das Widerstandsröhrchen (36) und der zylindrische Hüllkörper oder das Röhrchen (37) an der den Wachsaustritt (38) bildenden Stirnseite oder in deren Nähe miteinander leitend verbunden, vorzugsweise mittels eines Lasers verschweißt sind.

7. Vorrichtung nach Anspruch 3 oder 6, dadurch gekennzeichnet, dass die Arbeitsspitze (5) in einem Kopfteil (4) angeordnet ist, das ein hülsenartiges Verbindungselement (39), das das Widerstandsröhrchen (36) aufnimmt und über ein Konusteil (40) mit einem Pol (46) einer Spannungsquelle verbindet, ein äußeres, den zylindrischen Hüllkörper oder das Röhrchen (37) aufnehmendes Gehäuse (41), das eine Verbindung zu dem anderen Pol (49) der Spannungsquelle schafft, und einen das Verbindungselement (39) mit dem Gehäuse (41) fest verbindenden und voneinander elektrisch isolierenden Einsatz (42) aufweist.

8. Vorrichtung nach Anspruch 1 oder 6, dadurch gekennzeichnet, dass die Arbeitsspitze (5) und/oder das Kopfteil (4) auswechselbar ist.

9. Vorrichtung nach Anspruch 7, dadurch gekennzeichnet, dass das Kopfteil (4) durch Einschrauben oder Einstecken und Einrasten in eine innerhalb des Gehäuses (3) vorgesehene Aufnahmevorrichtung (43) dichtend befestigbar und auf entsprechend einfache Weise von diesem lösbar ist, wobei dadurch auch die elektrischen Kontakte (46,49) der beiden Röhrchen (36,37) herstellbar bzw. trennbar sind.

10. Vorrichtung nach wenigstens einem der vorhergehenden Ansprüche, dadurch gekennzeichnet, dass die Vorrichtung einen vorzugsweise an dem Gehäuse (3) angeordneten Schalter, mit dem der zum Aufheizen der Arbeitsspitze (5) vorgesehene Stromkreis schließbar ist, sowie vorzugsweise eine Steuereinrichtung aufweist, mit der die Bearbeitungstemperatur der Arbeitsspitze (5) im Wesentlichen festlegbar ist, wobei diese Steuereinrichtung vorzugsweise außerhalb des Gehäuses (3), in einem Steuergerät angeordnet und über eine Steuerleitung (13) angebunden ist.

11. Vorrichtung nach Anspruch 1, dadurch gekennzeichnet, dass die Vorratskammer (7) in ihrem vorderen, dem Kopfteil (4) zugewandten Bereich mittels eines Heizelementes (11) vorzugsweise elektrisch beheizbar ist.

12. Vorrichtung nach Anspruch 11, dadurch gekennzeichnet, dass die Vorratskammer (7) durch einen Nachfüllschacht (10) oder durch eine abschraubbare Endkappe (53) mit festen Wachspatronen befüllbar ist.

13. Vorrichtung nach Anspruch 11, dadurch gekennzeichnet, dass sie mit Mitteln zum Ein- und Ausschalten des Heizelementes (11) sowie zur Regelung und Steuerung der Temperatur der Vorratskammer (7) versehen ist, wobei diese Mittel im Wesentlichen innerhalb des Gehäuses (3) oder außerhalb, vorzugsweise gemeinsam mit der Steuereinrichtung zur Steuerung der Betriebstemperatur der Arbeitsspitze (5) in einem Steuergerät angeordnet und mit dem Heizelement (11) über eine Steuerleitung (13) verbunden sind und zum Abgreifen der Temperatur der Vorratskammer (7) ein Temperatursensor (12) vorzugsweise in der Nähe des Heizelementes (11) angebracht ist.

14. Vorrichtung nach Anspruch 11 bis 13, dadurch gekennzeichnet, dass die Vorratskammer (7) im Wesentlichen von einer vorzugsweise zylindrischen Wand (8) umschlossen ist, die vorzugsweise aus einem elektrisch leitfähigen Material besteht und in den Stromkreis zur Beheizung der Arbeitsspitze (5) sowie vorzugsweise in den Stromkreis zur Regelung der Temperatur der Vorratskammer (7) integriert ist.

15. Vorrichtung nach Anspruch 1, dadurch gekennzeichnet, dass in dem Zulaufkanal (16) zwischen der Vorratskammer (7) und der Arbeitsspitze (5) bzw. dem Kopfteil (4) ein auswechselbarer Filter (61) angeordnet ist, das Schmutzpartikel aus dem flüssigen Wachs abscheidet.

16. Vorrichtung nach Anspruch 1, dadurch gekennzeichnet, dass die Dosiereinrichtung (35) eine im Wesentlichen in der Vorratskammer (7) befindliche Vorschubeinrichtung (17) zum Wachstransport, eine Betätigungseinrichtung (24) zur Bedienung der Dosiereinrichtung (35) sowie eine Freigabeeinrichtung (28) zum Freigeben und Sperren des Wachszulaufs aufweist.

17. Vorrichtung nach Anspruch 16, dadurch gekennzeichnet, dass die Vorschubeinrichtung (17) durch eine bewegbare Kolbenstange (18) gebildet wird, die an ihrem vorderen, dem Kopfteil (4) zugewandten Ende mit einem Schubkolben (19) versehen ist, der während der Auftragsarbeit geschmolzenes Wachs aus der Vorratskammer (7) in den Zulaufkanal (16) herausdrückt.

18. Vorrichtung nach Anspruch 16, dadurch gekennzeichnet, dass die Betätigungseinrichtung (24) als eine Taste (25) ausgebildet ist, die vorzugsweise schwenkbar an einem Halteelement (26) gelagert ist, das vorzugsweise an der Außenseite des Gehäuses (3) angebracht ist, wobei die Taste (25) über ein in das Innere des Gehäuses (3) hineinragendes Eingreifelement oder einen Eingreifarm (27) mit der Freigabeeinrichtung (28) verbunden ist.

19. Vorrichtung nach Anspruch 16 bis 18, dadurch gekennzeichnet, dass zu der Freigabeeinrichtung (28) im Wesentlichen eine Zugstange (29), die über ein Übertragungselement (31), vorzugsweise eine schwenkbar gelagerte Pendelhülse mit der Betätigungseinrichtung (24) gekuppelt ist, sowie eine Mitnehmervorrichtung (30) gehören, die vorzugsweise durch ein Mitnehmer-Klemmplättchen (320) und eine Druckfeder (321) gebildet wird, wobei beim Betätigen der Betätigungseinrichtung (24) mit Hilfe des Übertragungselements (31) die Zugstange (29) und über die Mitnehmervorrichtung (30) die Vorschubeinrichtung (17) in Richtung auf die Arbeitsspitze (5) geschoben und beim Loslassen der Betätigungseinrichtung (24) die Mitnehmervorrichtung (30), die Zugstange (29) sowie die Betätigungseinrichtung (24) durch eine vorzugsweise auf der Kolbenstange (18) angebrachte Feder (33) in ihre Ausgangspositionen zurückgebracht werden.

20. Vorrichtung nach Anspruch 17, dadurch gekennzeichnet, dass die Vorschubeinrichtung (17), insbesondere der Schubkolben (19) durch eine Druckfeder (52) derart vorgespannt ist, dass er bei einem freigegebenem Zulaufkanal (16) durch diese vorgeschoben wird und geschmolzenes Wachs aus der Vorratskammer (7) in den Zulaufkanal (16) herausdrückt.

21. Vorrichtung nach Anspruch 16, dadurch gekennzeichnet, dass die Freigabeeinrichtung (28) durch ein Ventil (51), vorzugsweise ein Schubkolbenventil gebildet ist, das ein Ventilgehäuse (56), ein Verschlussglied (57) und eine Ventilfeder (62) aufweist, wobei beim Betätigen der Betätigungseinrichtung (24) das Verschlussglied (57) so verschoben wird, dass es den Zulaufkanal (16) für die Wachszufuhr freigibt und ansonsten durch eine Ventilfeder (62) in einen Sperrzustand überführt und darin gehalten wird, in dem der Zulaufkanal (16) und somit der Wachszulauf gesperrt ist.

22. Vorrichtung nach Anspruch 20 und 21, dadurch gekennzeichnet, dass die Betätigungseinrichtung (24) als ein Stift (50) oder eine Drucktaste (54) mit einem Stift (50) ausgebildet ist, der in das Innere des Gehäuses (3) hineinragt und bei Druckbeaufschlagung das Ventil (51) gegen die Ventilfeder (62) öffnet und der nach Beendigung der Druckbeaufschlagung durch eine Rückstellfeder (55) bzw. direkt über die Ventilfeder (62) in seine Ausgangsstellung zurückgebracht wird.
